# EUROPEAN PATENT APPLICATION

(11) **EP 4 831 853 A1**
(43) Date of publication of application: **28.10.2026**
(21) Application number: 25171660.1
(22) Date of filing: 22.04.2025
(51) Int. Cl.: G06F 21/60, G07C 9/27, H04L 9/40

(54) **ASSIGNING A SYNCHRONIZED ACCESS RIGHT TO A USER**

(71) Applicant: Siemens Schweiz AG, 8047 Zürich (CH)
(72) Inventor: GORRIAHN, Adam, 85748 Garching (DE); BROCK, Heike, 85748 Garching (DE); HASLER, Oliver, 6300 Zug (CH)
(74) Representative: Siemens Patent Attorneys

(57) **Abstract**

Assigning a synchronized access right to a user

The disclosure relates to a method for assigning a synchronized access right to a user, comprising the steps:
• receiving a digital access right, wherein the digital access right assigns access to a virtual domain to the user, wherein the digital access right comprises a time of creation,
• receiving a physical access right, wherein the physical access right assigns access to a physical domain to the user, wherein the physical access right comprises a time of creation,
• comparing the time of creation of the digital access right and the time of creation of the physical access right, and
• assigning the synchronized access right to the user, depending on a result of the comparing of the digital access right and the physical access right, the synchronized access right comprising an updated digital access right or an updated physical access right.

The disclosure relates to a computer program product, a device, and a Virtual-World-System.

## Description

Independent of the grammatical term usage, individuals with male, female or other gender identities are included within the term.

### DESCRIPTION

### Field of the Invention

The disclosure relates to a method for assigning a synchronized access right to a user. The disclosure relates to a computer program product, a device, and a Virtual-World-System.

### Background of the Invention

Access rights management is a crucial aspect of information security and organizational governance, ensuring that the right individuals have the appropriate access to technology resources. This practice plays a vital role in protecting sensitive information from unauthorized access, thereby preventing data breaches, and maintaining compliance with regulatory standards.

In the building infrastructure domain, access rights management involves controlling who has access to different parts of a building, and the information and facilities associated with that part of the building. Building access rights are tied to physical places within a building. Commonly, such rights are not synchronized with the digital twin of the building (e.g. a building information model (BIM)) nor its virtual representation in the Industrial Metaverse. This represents a risk since unauthorized persons might be able to access sensitive information of the digital twin, such as the building's layout, systems operations, and sometimes even sensitive data related to occupants. In mixed or virtual reality, users should only access virtual building sections available to them in the physical space.

For example, visitors in a large-scale office complex can freely explore the lobby and other public areas, but they require additional authorization to access workspace areas. Employees can enter general workspace areas and meeting rooms but might only be able to access certain equipment rooms based on their specific sub-organization within the company. Areas with protected equipment or special facilities such as Heating, Ventilation, and Air Conditioning (HVAC) instalments - whose maintenance requires a specific knowledge or skillset - should only be accessible by trained professionals.

A holistic concept for spatial access control that extends a building's physical representation to the virtual space and synchronizes among both domains is especially suited for smart infrastructures that deal with the synchronization of the physical and real worlds, such as Building Twin. Under the scope of the Industrial Metaverse, Building Twins allow for a multitude of possible use cases and practical applications. These can range from virtual training for building maintenance to remote collaboration and facility management, in which a professional is located on-site and supported by one or more colleagues remotely. For the successful implementation of future Metaverse interactions in the building infrastructure domain, a principle for virtual access control, its seamless synchronization with existing on-site access management points and the coupling to convincing visualization are essential.

As of now, no existing work has tackled the issue of spatial access in Metaverse environments. The hybrid nature of this problem, situated at the intersection of physical-virtual interactions and experiences, represents a novel and previously unexplored challenge.

In the building domain, previous works have addressed virtual access right management based on BIM data [Kim, Mikyoung, Seungyeul Ji, and Hanjong Jun. "BIM-based file synchronization and permission management system for architectural design collaboration." Journal of Asian Architecture and Building Engineering 16.3 (2017): 511-518. Beach, Thomas, et al. "Governance model for cloud computing in building information management." IEEE Transactions on Services Computing 8.2 (2013): 314-327.]. However, these works largely focus on permission management in virtual space and usually do not consider the situation where an individual moves through a virtual space with access restrictions. Therefore, there does not exist a virtual space and therefore no synchronisation between a physical world and a virtual world, On the other hand, recent research that targets hybrid environments or cyber-physical systems do not address spatial access management but mostly focus on human factors. Amongst others, they explore how cyberspace interferes with physical space and human perception of urban space [Yao, P., Follesa, S. (2022). "Urban Spatial Narration Research Based on Hybrid Space." In: Tareq Ahram and Redha Taiar (eds) Human Interaction & Emerging Technologies (IHIET-AI 2022): Artificial Intelligence & Future Applications. AHFE (2022) International Conference. AHFE Open Access, vol 23. AHFE International, USA.], or how people interact and share spaces in hybrid environments [Lundgren, R.; Kyrö, R.; Jylhä, T. "Access-Based Consumption in the Built Environment: Sharing Spaces." Sustainability 2022, 14, 5550].

In of 3D game environments, players gain access to certain areas based on collected assets or individual properties of a chosen character. To ensure that players can only move around sections of the virtual game world for which they have previously gained authorization, a combination of game design and programming is used to create an impression of access restrictions. In 3D games, however, no corresponding physical world and no corresponding physical rights exist. Although technological implementation can vary widely depending on the type of game, the game's platform, and the tools and engines used to develop the game, its main principle always includes the following components: access control based on necessary requirement checks, explicit visualization through visual barriers such as locked doors or walls, and dynamic loading of novel contents whenever applicable. In this invention disclosure, we take inspiration from these features to propose a pipeline that is specifically tailored to the building domain.

Accordingly, there is a need for a method for assigning physical access rights and virtual access rights.

### Summary

Embodiments herein generally relate to a method for assigning a synchronized access right to a user
In one embodiment, a method for assigning a synchronized access right to a user is disclosed, the method including the steps of:
- receiving a digital access right, wherein the digital access right assigns access to a virtual domain to the user, wherein the digital access right comprises a time of creation,
- receiving a physical access right, wherein the physical access right assigns access to a physical domain to the user, wherein the physical access right comprises a time of creation,
- comparing the time of creation of the digital access right and the time of creation of the physical access right, and
- assigning the synchronized access right to the user,
   depending on a result of the comparing of the digital access right and the physical access right, the synchronized access right comprising an updated digital access right or an updated physical access right.

According to the embodiments a physical access right is synchronized if a newer digital access right exists. Vice versa, a digital access right is synchronized if a newer physical access right exists.

According to a further embodiment, the method is especially performed by a synchronization module.

According to a further embodiment, if the time of creation of the digital access right is (before, e.g. lower older than) the time of creation of the physical access right, the synchronized access right comprises the updated digital access right.

According to this embodiment, the result of comparing (the time of creation of the digital access right and the time of creation of the physical access right) is that the time of creation of the digital access right is lower (e.g. older) than the time of creation of the physical access right. Therefore, the time of creation of the physical access right is newer and the digital access right is synchronized according to the physical access right and an updated digital access right is created. In this case the synchronized access right contains the updated digital access right.

According to a further embodiment, if the time of creation of the digital access right is after (e.g. higher, newer than) the time of creation of the physical access right, the synchronized access right comprises the updated physical access right.

According to this embodiment, the result of comparing (the time of creation of the digital access right and the time of creation of the physical access right) is that the time of creation of the physical access right is lower (e.g. older) than the time of creation of the digital access right. Therefore, the time of creation of the digital access right is newer and the physical access right is synchronized according to the digital access right and an updated physical access right is created. In this case the synchronized access right contains the updated physical access right.

In a further embodiment the physical domain (e.g. physical world, physical environment, real world, real environment) is arranged as:
- a building, and/or
- a room, and/or
- a part of a building, and/or
- a part of a room, and/or
- a construction site, and/or
- a meeting room, and/or
- a research laboratory, and/or
- an equipment rooms, and/or
- a building infrastructure, and/or
- an area, and/or
- an outdoor space, and/or
- a confidential environment, and/or
- a landscape.

In a further embodiment the digital domain (e.g. digital world, virtual world, also "digital environment") is arranged as:
- a virtual reality domain, and/or
- an augmented reality domain, and/or
- a metaverse environment, and/or
- a digital twin of the physical domain, and/or
- a model of the physical domain, and/or
- a building information model (BIM), and/or
- a building plan, and/or
- a building system information, and/or
- a building material specification.

In a further embodiment the physical access right, the digital access right, the updated digital access right and/or the updated physical access right are tied to:
- a user occupation, and/or
- a specific sub-organization (e.g. Heating, Ventilation, and Air Conditioning HVAC and/or sanitary services) within a company of the user, and/or
- a qualification of the user, and/or
- a validity of a user certificate.

According to this embodiment, the access rights are dependent on features of the user. This has the advantage that access is restricted to a certain user and/or certain user groups.

In a further embodiment the digital domain corresponds to the physical domain.

The rights for both physical and virtual areas are linked to areas, allowing them to spatially correspond. This has the advantage that the physical access right can be synchronized and/or update according to the digital access right and vice versa.

In a further embodiment the method comprises the additional step of receiving a query for assigning a synchronized access right to the user. This step is especially performed as a first step of the described method.

This embodiment has the advantage that the method according to this disclosure is triggered by the query for assigning a synchronized access right to the user. This query triggers the execution of the method for assigning a synchronized access right to the user according to this disclosure.

In a further embodiment the physical access right is enforced by:
- a physical barrier, and/or
- a gate, and/or
- a locked door, and/or
- a wall, and/or
- a fence, and/or
- a guard.

In a further embodiment the digital access right and/or the physical access right are enforced by a requirement check module, especially dependent on a level of detail of a digital domain.

The requirement check module being arranged to check the digital access right and/or the physical access right and comparing them with an access requirement.

The requirement check module preventing an unauthorized user from accessing restricted areas that are not accessible based on a digital access right and/or physical access right given to the unauthorized user. The requirement check module allowing an authorized user to exclusively access restricted areas that are allowed and/or accessible based on a digital access right and/or physical access right given to the authorized user.

In a further embodiment the method comprises the additional steps of visualizing the digital domain according to:
- the synchronized access right, and/or
- the updated digital access right, and/or
- the digital access right.

According to a further embodiment this method steps are performed by a visualization module. Through visualizing a visualization is created. The visualisation is arranged as a virtual wall, a virtual barrier, a virtual fence, a virtual gate and/or door. The visualisation has the advantage to make the digital access right visual to the user by the visualisation.

According to a further embodiment, especially an offline step is used to semantically analyse digital domain data and create access-based 3D component stacks of the digital domain.

According to a further embodiment, especially during
an online visualisation step, the 3D component stacks are dynamically visualized according to a user's access rights, progressively revealing sections based on the detail level of the digital domain and current access right status.

According to a further embodiment a computer program product is provided. The computer program product comprising instructions which, when the program is executed by the computational device, cause the computational device to carry out the steps of the method according to this disclosure.

According to a further embodiment a device is provided. The Device comprising a computer program product according to this disclosure. The device further comprising:
- a synchronization module,
- a requirement check module, and
- a visualization module.

According to this embodiment, the proposed device consists of three connected modules: A) a module to synchronize access rights between the virtual and physical domain, B) a module to check requirements that influence access to specific areas within a building, and C) a module for efficient visualization of especially a virtual building twin in especially a Metaverse environment.

According to a further embodiment a Virtual-World-System is provided. The Virtual-World-System comprising:
- a device according to this disclosure,
- a storage unit for storing access rights,
- a visualization unit, e.g. a monitor and/or augmented reality glasses and/or virtual reality glasses.

The method and products according to this disclosure, e.g. a synchronization between virtual and physical spatial access rights, lists the following advantages over non-synchronized access management:
- Improved security: by synchronizing access rights, companies can ensure that only authorized individuals have access to both physical and virtual resources, reducing the risk of unauthorized access and potential security breaches.
- Simplified administration: by regularly using the query of the synchronization module, the administrative burden and the likelihood of errors, such as failing to update access rights in one of the environments when a user's role changes, is minimized.
- Reduced costs: operational costs are reduced by improving security and simplifying access rights administration.

For the Industrial Metaverse, the proposed permanent hybrid connection between the physical and virtual world allows for safer and more secure experiences and interactions. Synchronous exploration of physical and virtual building environments pushes the limits of Extended Reality (XR) experiences and allows for more immersive and hence effective application scenarios. Some examples are:
- Remote support of maintenance workers
- Virtual building inspection
- Virtual training of facility management staff

Key aspect is the proposed software pipeline of three intertwined modules, which brings spatial access rights from the physical to the virtual domain in a way that is highly familiar and intuitive to the user.

It is to be understood that the elements and features recited in the appended claims may be combined in different ways to produce new claims that likewise fall within the scope of the present invention. Thus, whereby the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

### Brief Description of the Drawings

- Fig. 1: shows a flow diagram of a method according to the invention,
- Fig. 2: shows a flow-diagram of the synchronization of an access right,
- Fig. 3: shows a requirement check module, and
- Fig. 4: shows a visualization module.

### Detailed Description of the Drawings

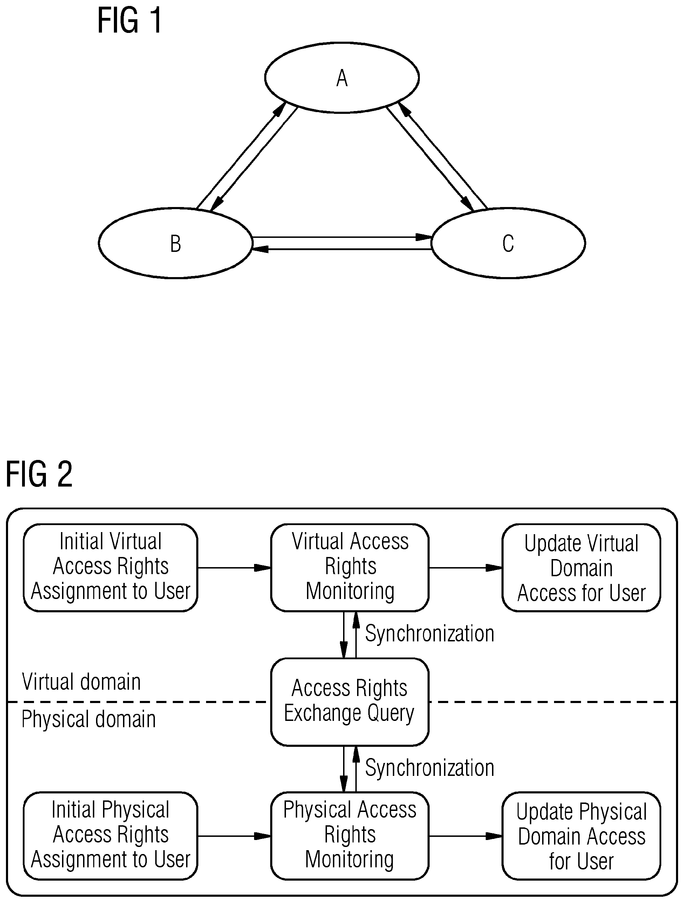

Fig. 1 shows a device comprising a computer program product according to this disclosure, the device further comprising:
- a synchronization module A,
- a requirement check module B, and
- a visualization module C.

The device comprising three distinct computing modules that seamlessly merge a physical building with its virtual representation on one or more computing devices. All three modules communicate with each other and together form a software architecture for mirroring access rights among the physical and virtual domain designed to facilitate hybrid interactions in the Industrial Metaverse of the infrastructure domain. Given a building domain, we assume that the user is initially assigned access rights to both the physical building aspects and the digital twin of the building. We refer to the physical aspects as the physical domain, while the digital twin represents the virtual domain.

### A) Synchronization Module A

The main task of the synchronization module A is to ensure consistency between the physical world and the digital twin. This consistency ensures that individuals can only access specific areas within both the virtual and physical buildings for which they have pre-authorized access. Additionally, it guarantees that sensitive information from the digital twin is not shared with individuals lacking physical access rights to the corresponding building sector, and vice versa.

### Initial assignment of access rights

The access rights for the physical area allow users to access meeting rooms, research laboratories, equipment rooms or the building infrastructure. Usually, such physical access rights are tied to the user occupation, such as a specific sub-organization within a company or HVAC or sanitary services. Similarly, the access rights for the building twin should allow users to access the same building sections in its virtual representations. Optionally, this virtual access might also come jointly with additional digital aspects that are normally found in BIM, such as building plans, building system information or material specifications.

### Access Rights Monitoring

Once the access rights have been assigned, we propose monitoring the access rights in both the physical and virtual domains. If a change to the assigned user access rights is detected in either the physical or virtual domain, a query is triggered to synchronize the access rights. This query asks the access rights administration whether the physical and virtual domains should be synchronized. As soon as the administration responds to the query, the user rights are updated in both the physical and virtual domains. This ensures consistency between the virtual and physical domains, allowing users both physical and digital access to building sectors authorized by the administration.

The proposed synchronization of access rights is shown in Figure 2. In the virtual domain, the method starts with "Initial virtual Access right assignment to a user", followed by "Virtual access right monitoring". In the physical domain, the method starts with "Initial physical Access right assignment to a user", followed by "physical access right monitoring". The "Virtual access right monitoring" and the "physical access right monitoring" are processed through "synchronization" triggered by a "access right exchange query". Afterwards a "Update of the virtual domain Access for the user" and/or a "Update of the virtual domain Access for the user" is performed.

### B) Requirement Check Module B

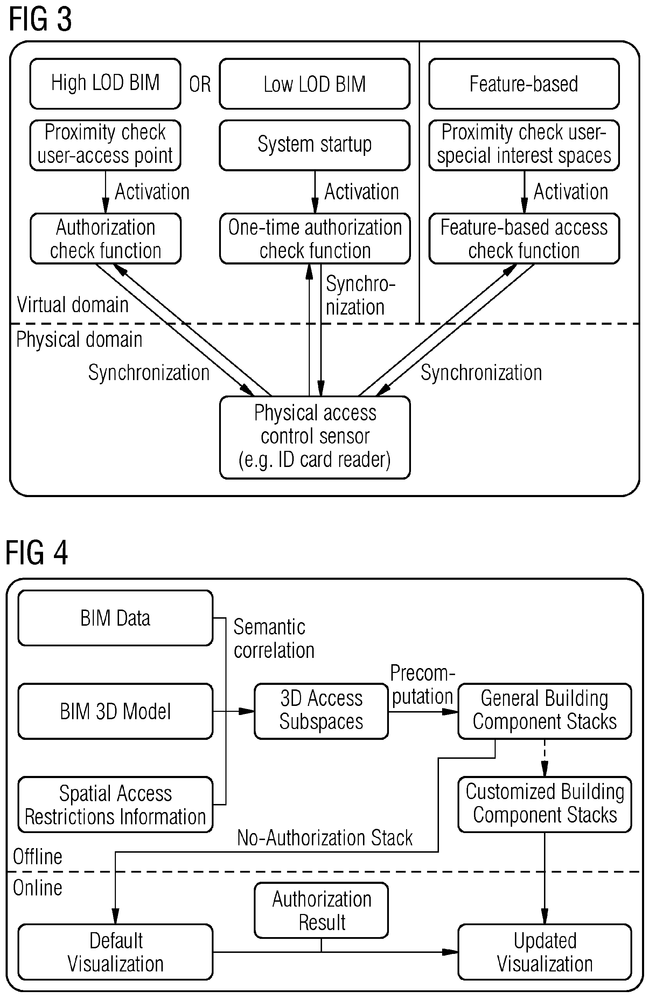

The main task of the requirement check module B shown in Figure 3 is to prevent users from accessing restricted areas that are not accessible based on the specific access rights given to the user, as defined by the synchronization module.

In the physical domain, access to specific sections in a building is linked to physical barriers such as gates or locked doors. Access to restricted sections can be granted once authorization has been successfully performed, e.g. in form of reading an access card or by entering an access codeword. The same barriers should be present in the virtual domain, without additional overhead to set up and register existing authorization channels that already exist in the physical world. In the virtual domain the specific authorization channels can be established in different ways, based on the level of detail (LOD) given in the building twin representation and its underlying BIM as well as specific features and properties defined by the building administrator.

### Access Check for High LOD BIM

BIM with high LOD that contain information on sensors for physical access authorization, such as card readers, allow for a straightforward implementation of access checks in the virtual domain. In that case, we transfer the access check elements from the high LOD BIM to the virtual representation by establishing correspondences between BIM and the virtual representation. In the physical domain, authorization is performed e.g. by personal identification through ID card check via a physical card reading sensor. In the virtual domain, the access check functionality is implemented through a respective function for card control whenever a user virtually moves through the building and is approaching a virtual access point in the building twin. The access check function is called once the distance between the virtual position of the user and the access point location falls below a certain threshold and if the user has not been present in near vicinity previously.

### Access Check for Low LOD BIM

For BIM that do not provide information on a building's access authorization points, virtual access to specific sections of a building twin can be granted utilizing a simple authorization check during initialization of the virtual scene, such as one-time reading of personal access cards with a physical card reader. The access check functionality is implemented by calling a function for card control in the system start routine, and the user's respective access rights are saved for all further explorations and spatial interactions in the building twin.

### Feature-Based Access Checks

Rooms with technical equipment that require enhanced safety features for access of individuals, such as rooms for HVAC control units, can be tied to additional safety checkpoints. For example, a technical operator might be required to wear protective clothing such as a helmet or safety shoes when entering restricted sections of a physical building. Likewise, it should be ensured that the operator is wearing all the required accessories when performing tasks in the virtual domain. This access check functionality can be implemented by constraining access to specific sections of the building to the presence of one or more pre-defined necessary access features. Sections of the virtual building representations are marked accessible only once feature-based access control has been passed, as performed through a call of a conditional feature check. Amongst others, the presence of access features can be determined by a visual question-answering system of the user side triggered by the access control. The idea for a feature-based access check is to get individuals accustomed to the use of safety features even in the virtual domain and hence enforce its proper application in the physical domain.

### C) Visualization Module C

The main task of the visualization module C is to make any spatial interaction with the virtual building twin as immersive and intuitive as possible, while providing an exact replication of its physical counterpart with all existing spatial access barriers.

The visualization module constitutes of an offline pipeline for precomputation of visual 3D elements and an online workflow for run time execution as shown in Figure 4.

The offline pipeline is concerned with the semantic analysis of the building as defined in the physical domain. In particular, the pipeline divides the complete 3D building model into separate access subspaces. For high LOD BIM, it uses known construction details and spatial access information from the BIM. For low LOD BIM, it relies on semantic analysis of the BIM to derive spatial access information. These subspaces and their respective access labels then form different stacks of building components that can be progressively combined to a 3D model of the physical building specific to given user access rights. For example, the most basic 3D model for an individual with no access authorization, like an external visitor, would be assembled from the 3D environments of all generally accessible sections only, such as a building's reception hall or a conference zone. For an individual with access to all sections of a building, the combination of all relevant access stack components would result in the complete 3D building model. Optionally, all building component stacks can further be customized to enhance display of specific access sections or access authorization ports in the virtual domain. The online workflow is responsible for the display of all the visual elements associated with specific access rights. It makes use of the previously computed building component stacks and authorization results fetched from the Requirement Check Module. During startup of the virtual scene, an initial default visualization of the building is loaded. This usually constitutes all elements of the no-authorization component stack, i.e. all sections of the building without access restrictions. After a positive requirement check, the visualization is then updated dynamically by adding all elements of the component stacks a certain user has been granted access for to the displayed 3D model. Based on the BIM's LOD, this update step can be either performed repeatedly for all building sections within a certain vicinity of the user (case: high LOD BIM) or once after initial authorization (case: low LOD BIM).

### Customization

The creation of building component stacks allows for a variety of customizations that enhance visualization of a building's spatial access rights. Amongst others, the 3D elements of different component stacks could be toned in varying colours to indicate separate sections within the building. Physical access barriers could be highlighted by additional 3D elements, such as virtual stop signs, semi-transparent walls, safety requirement warnings (case: feature-based access checks), or other visual cues. The implementation of such customizations is left to the discretion of the end user and the target application scenario.

Although the invention has been explained in relation to its advantageous embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. A method for assigning a synchronized access right to a user,
comprising the steps:
• receiving a digital access right, wherein the digital access right assigns access to a virtual domain to the user, wherein the digital access right comprises a time of creation,
• receiving a physical access right, wherein the physical access right assigns access to a physical domain to the user, wherein the physical access right comprises a time of creation,
• comparing the time of creation of the digital access right and the time of creation of the physical access right, and
• assigning the synchronized access right to the user,
depending on a result of the comparing of the digital access right and the physical access right, the synchronized access right comprising an updated digital access right or an updated physical access right.

2. Method according to claim 1,
wherein if the time of creation of the digital access right is before the time of creation of the physical access right, the synchronized access right comprises the updated digital access right.

3. Method according to one of the previous claims,
wherein if the time of creation of the digital access right is after the time of creation of the physical access right, the synchronized access right comprises the updated physical access right.

4. Method according to one of the previous claims,
wherein the physical domain is arranged as:
- a building, and/or
- a room, and/or
- a part of a building, and/or
- a part of a room, and/or
- a construction site, and/or
- a meeting room, and/or
- a research laboratory, and/or
- an equipment rooms, and/or
- a building infrastructure, and/or
- an area, and/or
- an outdoor space, and/or
- a confidential environment, and/or
- a landscape.

5. Method according to one of the previous claims,
wherein the digital domain is arranged as:
- a virtual reality domain, and/or
- an augmented reality domain, and/or
- a metaverse environment, and/or
- a digital twin of the physical domain, and/or
- a model of the physical domain, and/or
- a building information model (BIM), and/or
- a building plan, and/or
- a building system information, and/or
- a building material specification.

6. Method according to one of the previous claims,
wherein the physical access right, the digital access right, the updated digital access right and/or the updated physical access right are tied to:
- a user occupation, and/or
- a specific sub-organization within a company of the user, and/or
- a qualification of the user, and/or
- a validity of a user certificate.

7. Method according to one of the previous claims,
wherein the digital domain corresponds to the physical domain.

8. Method according to one of the previous claims,
With the additional step of:
- receiving a query for assigning a synchronized access right to the user.

9. Method according to one of the previous claims,
wherein the physical access right is enforced by:
- a physical barrier, and/or
- a gate, and/or
- a locked door, and/or
- a wall, and/or
- a fence.

10. Method according to one of the previous claims,
wherein the digital access right and/or the physical access right are enforced by a requirement check module (B), especially dependent on a level of detail of the digital domain.

11. Method according to one of the previous claims,
with the further step of:
- visualizing the digital domain according to:
∘ the synchronized access right, and/or
∘ the updated digital access right, and/or
∘ the digital access right.

12. A computer program product comprising instructions which, when the program is executed by the computational device, cause the computational device to carry out the steps of the method according to one of the claims 1 to 11.

13. Device comprising a computer program product according to claim 12,
the device further comprising:
- a synchronization module (A),
- a requirement check module (B), and
- a visualization module (C).

14. Virtual-World-System comprising:
- a device according to claim 13,
- a storage unit for storing access rights,
- a visualization unit.
